# EUROPÄISCHE PATENTSCHRIFT

(11) **EP 0 846 902 B1**
(45) Veröffentlichungstag und Bekanntmachung des Hinweises auf die Patenterteilung: **04.06.2003**
(21) Anmeldenummer: 97250348.6
(22) Anmeldetag: 18.11.1997
(51) Int. Cl.: F16K 31/06

(54) **Elektropneumatisches Ventil**
Electro-pneumatic valve
Vanne électropneumatique

(30) Priorität: 06.12.1996 DE 19652410
(43) Veröffentlichungstag der Anmeldung: 10.06.1998
(73) Patentinhaber: Rexroth Mecman GmbH, 30453 Hannover (DE)
(72) Erfinder: Scharnowski, Gerhard, Dipl.-Ing., 30989 Gehrden (DE); Nguyen, Huu-Tri, Dipl.-Ing., 31275 Lehrte (DE); Kook, Ralf, 30629 Hannover (DE); Mauentöbben, Reinhard, Dipl.-Ing., 30659 Hannover (DE)
(74) Vertreter: Maiwald Patentanwalts GmbH

(56) Entgegenhaltungen:
- DE-A- 4 037 172
- DE-B- 1 650 552
- FR-A- 1 562 935
- US-A- 3 771 760

## Beschreibung

Die Erfindung betrifft ein elektropneumatisches Ventil gemäß dem Oberbegriff des Patentanspruches 1

Aus der US 3,771,760 ist ein solches gattungsgemäßes Ventil bekannt.

Ein Ventil dieser Art setzt sich aus einem Ventilteil und einem elektrisch betriebenen Proportionalmagneten zusammen. Der Proportionalmagnet dient zur analogen Betätigung des Ventilteils und damit zur Steuerung einer durch das Ventil zu beeinflussenden Durchflussmenge an Druckmittel. Er stellt eine gegenüber dem Ventilteil eigenständige Baueinheit dar, die mit dem Ventilteil lösbar verbunden ist. Die Verbindung erfolgt meist über eine Verschraubung.

Aus dem Produktkatalog "Knowhow in Pneumatik" der Firma Mannemsann Rexroth Pneumatik GmbH (Best-Nr.: 10/93) geht auf der Seite 7.026 ein derartiges Ventil hervor, welches als Druckregelventil verwendet wird und als 3/3-Wegesitzventil mit Proportionalmagnetantrieb ausgeführt ist.

Das Ventil des elektropneumatischen Ventils besteht im wesentlichen aus einem Ventilkörper, an dem sich Druckmittelanschlüsse sowie Anschlüsse für elektrische Signalleitungen und der Stromversorgung befinden. Im Inneren des Ventilkörpers wirken zur Gewährleistung der Ventilfunktion im wesentlichen ein Stößel mit Ventilteller und Ventilsitz aufeinander.

Der an dem Ventilteil befestigte Proportionalmagnet besteht im wesentlichen aus einer elektrischen Spule und einem in seiner Längsrichtung geführten und bewegbaren Anker mit Stößel. Der Anker wird durch eine Feder in seiner Ausgangslage gehalten. Der daran sich anschließende Stößel dient zur Übertragung der von der elektrischen Spule erzeugten Kraft auf das Ventil. Zu deren Betätigung trifft der Stößel des Ankers auf den ebenfalls längs seiner Bewegungsrichtung geführten Ventilstößel des Ventilteils. Beide Stößel sind dafür fluchtend zueinander angeordnet und stehen am einander zugewandten Ende in Kontakt. Dies ist notwendig, um beim Einschalten des Gerätes ein schlagartiges Aufeinandertreffen der Stößel des Proportionalmagnetankers und des Ventils zu vermeiden. Bei beliebiger Einbaulage wird der Kontakt durch eine zusätzliche Feder innerhalb des Ventilteils erhalten. Die Feder drückt den Ventilstößel gegen den Stößel des Proportionalmagneten. Die von der Spule erzeugte Kraft zur Ventilbetätigung muß damit sowohl die Kraft der Feder im Proportionalmagneten als auch die Kraft der Feder im Ventilkörper überwinden.

Dieses hat den negativen Effekt, daß der Wirkungsgrad des Proportionalmagneten verschlechtert wird. Die erforderliche Federkraft am Ventilstößel reduziert die verfügbare Stößelkraft der Proportionalmagneteinheit und reduziert somit auch die Schaltdynamik des Druckregelventils.

Der Erfindung liegt daher die Aufgabe zugrunde, ein Ventil der eingangs genannten Art so zu verbessern, daß ein günstigeres schaltdynamisches Verhalten erzielt wird, mit der Restriktion, zugleich den Bauteilaufwand gering zu halten.

Diese Aufgabe wird, ausgehend von einem Ventil gemäß dem Oberbegriff des Anspruchs 1, durch dessen kennzeichnende Merkmale gelöst. Vorteilhafte Ausgestaltungen sind in den Ansprüchen 2 und 3 angegeben.

Die Erfindung schließt die technische Lehre ein, daß bei einem elektropneumatischen Ventil mit Proportionalantrieb an einem Ende eines Stößels ein Ventilteller und am anderen Ende des Stößels der Anker des Proportionalmagneten vorgesehen ist, wobei der Ventilteller am Stößel angeformt ist und der Stößel sowie der Ventilteller aus einem nichtmagnetischen Material bestehen und daß der Ventilkörper über eine Passung mit dem Proportionalmagneten in Kontakt steht.

Die damit vorgenommene Verlagerung von Ventilbestandteilen auf den Proportionalmagneten durch eine einstückige Ausführung des Ventilstößels hat den Vorteil, daß eine bisher vorzusehene Führung des Ventilstößels im Ventilkörper entfallen kann. Die Führung des einstückigen Ventilstößels wird allein durch die Führung des Ankers in der Spule des Proportionalmagneten realisiert. Eine Passung zwischen dem Proportionalmagneten und dem Ventilkörper gewährleistet zudem die genaue Positionierung beider Bauteile zueinander und sichert insoweit eine zuverlässige Funktion des Ventils. Zusätzlich dazu entfällt auch die bisher vorzusehende Rückstellfeder für den Ventilstößel im Ventilkörper. Diese Maßnahmen reduzieren insgesamt den Bauteileaufwand und tragen damit auch zu einer Steigerung der Montagefreundlichkeit bei. Bei dem einstückig ausgeführten Ventilstößel mit Ventilteller und Anker wird die Kraftübertragung zwischen Proportionalmagnet und Ventilteller optimiert und ein Aufeinanderschlagen vom Stößel des Proportionalmagneten auf den Ventilstößel wird vermieden. Damit wird die Schaltdynamik insgesamt verbessert.

Beim Einsatz von Proportionalmagneten zur Betätigung des Ventilteils ist es vorgesehen, den Stößel mit dem Ventilteller aus nichtmagnetischem Material herzustellen, da sich sonst magnetische Teilchen, die sich im Luftstrom befindlichen können, am Stößel und am Ventilteller ablagern, was zu einem vorzeitigen Verschleiß sowie zu Undichtheiten am Ventil führen kann. Es ist auch denkbar, nur den Ventilstößel oder nur den angeformten Ventilteller, der zwischen dem Anker des Proportionalmagneten und dem Ventilteller angeordnet ist, aus unmagnetischem Material herzustellen, um somit eine Ausbreitung des Magnetismus vom Anker auf den Ventilteller zu vermeiden.

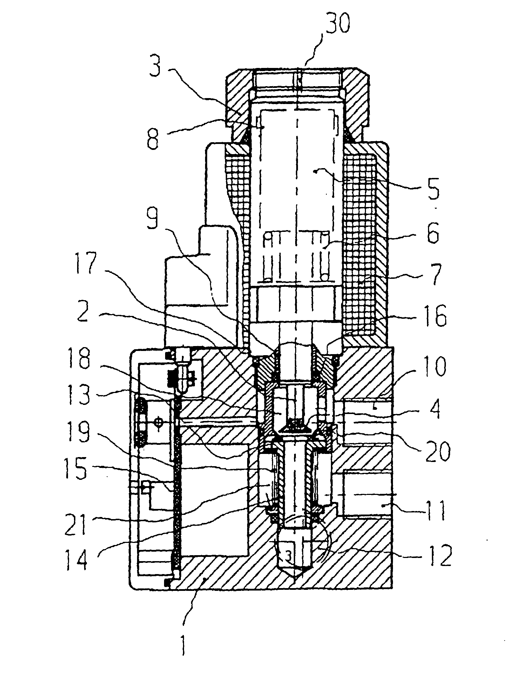

Des weiteren ist es denkbar, den Ventilteller an dem vom Proportionalmagneten abgewandten Ende des Stößels als separates Bauteil mittels einer lösbaren Verbindung auszuführen. Vorzugsweise kann diese lösbare Verbindung als Schraubverbindung ausgestaltet sein. Durch diese Maßnahme kann ein einfaches Auswechseln des einem Verschleiß unterliegenden Ventiltellers erzielt werden, ohne daß die gesamte betreffende Baugruppe - bestehend aus Stößel mit Ventilteller und Anker - getauscht werden muß. Vorteilhafter Weise besteht der auswechselbare Ventilteller aus einem zu einen starren Körper formbaren Kunststoff. Die Abdichtung übernimmt dabei nicht der Ventilteller, sondern eine gegenüber diesem am Ventilsitz oder einer Ventilhülse angeordnete elastische Dichtung. Andere vorteilhafte Weiterbildungen der Erfindung werden nachstehend zusammen mit der Beschreibung der bevorzugten Ausführung der Erfindung anhand der einzigen Figur näher dargestellt. In der einzigen Figur ist eine teilweise Schnittansicht eines 3/3-Wegesitzventil mit Proportionalmagnetantrieb dargestellt, wobei der Ventilteller am Stößel angeformt ist.

Das elektropneumatische Ventil besteht aus einem Ventilteil 1, das als 3/3-Wegesitzventil ausgeführt ist sowie einer damit verbundenen Antriebseinheit in Form eines Proportionalmagneten 3. Die Verbindung beider Baueinheiten ist als Schraubverbindung ausgeführt. Im Gehäuse des Proportionalmagneten 3 ist eine hohlzylinderförmige Spule 7 untergebracht. Der Anker 5 ist als beweglicher Spulenkern mittels Führungen 8 innerhalb der Spule in seiner Längsrichtung geführt. Am Anker 5 schließt sich der Stößel 2 in Verlängerung der Längsachse des Ankers 5 an. Dieser kann ebenfalls mit Führungen 9 versehen werden. Die Führungen 9 sind jedoch bei genügend präziser Ausführung der Führungen 8 des Ankers entbehrlich, da der Anker 5 mit dem Stößel 2 fest verbunden ist. Im stromlosen Zustand wird der Anker 5 mit Stößel 2 durch die Feder 6 in seiner Ausgangslage gehalten. An dem Anker 5 abgewandten Ende des Stößels 2, der sich in das Innere der Ventilteil 1 erstreckt, befindet sich der Ventilteller 4. Für den Stößel 2 ist eine dynamische Dichtung 16 vorgesehen, die den Druck im Ventilkörper 1 gegen den Atmosphärendruck abdichtet.

Der Ventilkörper 1 ist mit den Anschlüssen für die Druckluftversorgung 10, 11 und 12 versehen. Dabei ist ein A-Anschluß 10 mit der Arbeitsleitung, ein P-Anschluß 11 mit der Druckluftversorgungsleitung und ein R-Anschluß 12 mit der Entlüftungsleitung verbunden.

Der Ventilteller 4 wirkt gegen den Ventilsitz 13, 14. Damit der dem Proportionalmagneten 3 zugehörige und einstückig ausgeführte Stößel 2 eindeutig in seiner Lage zum Ventilsitz 13, 14 - der Bestandteil des Ventilteils ist - bestimmt ist und ein insoweit paßgenaues Zusammenwirken zwischen Stößel 2 und Ventilsitz 13,14 realisierbar ist, trägt der Ventilkörper 1 im Kontaktbereich zum Proportionalmagneten 3 eine Ausnehmung 17 in die ein komplementär ausgebildetes Gegenstück am Proportionalmagneten 3 paßgenau eingreift.

Zur Realisierung der 3/3-Wegeventilfunktion ist der Ventilsitz 13, 14 speziell ausgebildet. Er besteht aus der Ventilsitzhülse 14, die an der dem Ventilteller 4 zugewandten Stirnfläche eine aufvulkanisierte ringförmige Dichtung 13 trägt.

In der ersten Ventilfunktion (Entlüftung) liegt der Ventilteller 4 nicht auf der Dichtung 13 der Ventilsitzhülse 14 an, so daß ein Spalt zwischen der Ventilsitzhülse 14 und dem Ventilteller 4 entsteht. Dadurch kann das Druckmittel vom A-Anschluß 10 über den oberen Ventilraum 18 durch die Ventilsitzhülse 14 hindurch über den R-Anschluß 12 hinaus in die Atmosphäre strömen. In der zweiten Ventilfunktion (Nullstellung) liegt der Ventilteller 4 auf dem Dichtring 13 der Ventilsitzhülse 14 an. Damit kann kein Druckmittel vom P-Anschluß 11 der Druckmittelversorgungsleitung durch das Ventil strömen. Gleichfalls ist die Arbeitsleitung, die sich am A-Anschluß 10 befindet, gesperrt. In der dritten Ventilfunktion (Belüftung) liegt der Ventilteller 4 auf dem Dichtring 13 der Ventilsitzhülse 14 an und drückt diese gegen eine Feder 19 von ihrem Endanschlag weg. Der Endanschlag wird durch einen am Ventilkörper 1 ausgebildeten ringförmigen Sitz 20 gebildet. Es entsteht ein Spalt zwischen dem Sitz 20 und der Ventilsitzhülse 14, durch den das Druckmittel ausgehend vom P-Anschluß 11 über den unteren Raum 21 des Ventilkörpers 1 in den oberen Raum 18 und schließlich über den A-Anschluß 10 in die Arbeitsleitung strömen kann.

Um eine druckausgeglichene Betätigung des Ventils zu erreichen ist es günstig, wenn der Durchmesser des Ventiltellers 4 gleich dem Durchmesser der Öffnung in dem Ventilteil 1 ist, durch die sich der Stößel in das Innere des Ventilteils 1 erstreckt und dem Durchmesser der dynamischen Dichtung 16 sowie dem des ringförmigen Sitzes 20 entspricht.

Das 3/3-Wegesitzventils mit Proportionalmagnetantrieb wird als elektropneumatisches Druckregelventil verwendet, indem durch einen IST/SOLL-Vergleich von Druckwerten ein definierbarer Druck einstellbar ist. Die integrierte Regelungselektronik 15 führt den Vergleich zwischen dem Sollwert und dem als Istwert über einen piezoresistiven Drucksensor meßbaren Druck in der Arbeitsleitung durch. Der Regler generiert eine Stellgröße, die über einen getakteten U/l-Wandler und über den Proportionalmagneten (3) das 3/3-Wegesitzventil ansteuert, so daß sich der vorgeschriebene Druck einstellt.

Das 3/3-Wegesitzventil verfügt wegen des am Anker seines Proportionalmagneten vorgesehenen nichtmagnetischen starren Stößels, der direkt in einen angeformten Ventilteller ausläuft, über eine bauteilsparende Anordung einer Ventilbetätigungsmechanik, die die Schaltdynamik des Ventils verbessert. Eine hohe Schaltdynamik ist insbesondere für Druckregelventile gewünscht, um möglichst schnell etwaige Regelabweichungen ausgleichen zu können.

## Patentansprüche

1. Elektropneumatisches Ventil mit einem in seiner Längsrichtung bewegbaren Stößel (2), an dessen einem Ende ein Ventilteller (4) und an dessen anderem Ende ein Anker (5) eines als Ventiltrieb dienenden Proportionalmagneten (3) vorgesehen ist, wobei insbesondere der Ventilteller (4) am Stößel (2) angeformt ist und wobei der Stößel (2) und/oder der Ventilteller (4) am einem nichtmagnetischen Material bestehen und der Ventilkörper (1) über eine Passung mit dem Proportionalmagneten (3) in Kontakt steht,
**dadurch gekennzeichnet, daß** der dem Proportionalmagneten (3) zugewandte Raum (18) innerhalb des Ventilkörpers von dem unter Atmosphärendruck stehenden Spuleninnenraum des Proportionalmagneten (3) über eine dynamische Dichtung (16) am Stößel druckdicht voneinander getrennt ist.

2. Elektropneumatisches Ventil nach Anspruch 1,
**dadurch gekennzeichnet,**
**daß** der Stößel (2) mit seinem angeformten Ventilteller (4) aus einem Kunststoff bestehen.

3. Elektropneumatisches Ventil nach Anspruch 1,
**dadurch gekennzeichnet,**
**daß** der Ventilkörper (1) im Kontaktbereich zum Proportionalmagneten (3) eine Ausnehmung (17) aufweist, in die ein komplementär ausgebildetes Gegenstück am Proportionalmagneten (3) paßgenau eingreift.

## Claims

1. Electropneumatic valve with a slide (2) being movable along its longitudinal direction at which one end a valve head (4) and at which other end an anchor (5) of a proportional magnet (3) serving as valve drive are provided, wherein in particular the valve head (4) is formed at the slide (2) and wherein the slide (2) and/or the valve head (4) consist of a non-magnetic material and wherein the valve body (1) is in contact with the proportional magnet (3) via a fit,
**characterized in that** the space (18) within the valve body facing the proportional magnet (3) is pressure-tightly separated from the inner space of the coil of the proportional magnet (3) having an atmosphere pressure by means of a dynamic sealing (16) at the slide.

2. Electropneumatic valve according to claim 1,
**characterized in that** the slide (2) with its valve head (4) formed thereon consists of plastics.

3. Electropneumatic valve according to claim 1,
**characterized in that** the valve body (1) has a recess (17) in a contact area to the proportional magnet (3) into which a complementary configured counterpart at the proportional magnet (3) is accurately interfering.

## Revendications

1. Soupape électropneumatique comportant un coulisseau (2) mobile dans le sens de sa longueur à l'une des extrémités de celui-ci une tête de soupape (4) et à l'autre extrémité de celui-ci un induit (5) d'un aimant proportionnel (3) servant d'entraînement de soupape sont prévus, la tête de soupape (4) étant en particulier rapporté par formage au coulisseau (2) et le coulisseau (2) et/ou la tête de soupape (4) se constituant d'un matériau amagnétique et le corps de soupape (1) étant en contact avec l'aimant proportionnel (3) au travers d'un ajustement,
**caractérisé en ce que** l'espace (18) orienté vers l'aimant proportionnel (3) à l'intérieur du corps de soupape est séparé de manière étanche à la pression par un joint dynamique (16) au coulisseau de l'espace intérieur de la bobine de l'aimant proportionnel (3) sous pression atmosphérique.

2. Soupape électropneumatique selon la revendication 1,
**caractérisée en ce que** le coulisseau (2) et sa tête de soupape formée sur lui sont constitués en une matière plastique.

3. Soupape électropneumatique selon la revendication 1,
**caractérisée en ce que** le corps de soupape (1) dans la zone de contact avec l'aimant proportionnel (3) présente un creux (17) dans lequel une pièce faisant pendant, formée de manière complémentaire, s'engage dans l'aimant proportionnel (3) dans un parfait ajustage.
